Europäisches Patentamt

European Patent Office

Office européen des brevets

(19)

(11) Publication number: **0 149 032**
**B1**

(12) **EUROPEAN PATENT SPECIFICATION**

(45) Date of publication of patent specification: **30.11.88**

(51) Int. Cl.⁴: **H 02 G 1/14, H 02 G 15/184**

(21) Application number: **84112912.5**

(22) Date of filing: **26.10.84**

(54) Device for realizing cable joints comprising a preformed monolithic sleeve.

(30) Priority: **27.12.83 IT 2438283**

(43) Date of publication of application:
**24.07.85 Bulletin 85/30**

(45) Publication of the grant of the patent:
**30.11.88 Bulletin 88/48**

(84) Designated Contracting States:
**BE CH DE FR GB LI NL SE**

(56) References cited:
**AT-B- 332 479**
**DE-A-3 001 158**
**FR-A-2 503 476**

**PATENTS ABSTRACTS OF JAPAN, vol. 3, no.
71 (E-118), 20th June 1979, page 31E118; & JP -
A - 54 49588 (FURUKAWA DENKI KOGYO K.K.)
18-04-1979**

(73) Proprietor: **Società Cavi Pirelli S.p.A.
Piazzale Cadorna 5
I-20123 Milan (IT)**

(72) Inventor: **Vallauri, Ubaldo
Via Sacconi, 4
Monza (Milan) (IT)**
Inventor: **Lombardi, Gino
Via Piave, 4
Quattordio (Alessandria) (IT)**

(74) Representative: **Mariani, Giorgio, Dr. et al
INDUSTRIE PIRELLI S.p.A. Direzione Brevetti
Piazzale Cadorna, 5
I-20123 Milano (IT)**

Courier Press, Leamington Spa, England.

## Description

The present invention refers to a device for realizing cable-joints — and more particularly, for realizing joints for cables having extruded insulations, of the type comprising a preformed monolithic-sleeve fitted onto the extremities of the two cables which are coupled together.

Cable-joints having extruded insulations — of the type comprising a monolithic-sleeve, are per se already known.

This type of joint is, in practice, normally utilized in the sector for low and medium voltage cables. Moreover, their use has already been suggested for the high voltage cable sector — as results, for example, from the U.K. PATENT No. 1.142.050.

For being able to utilize the known monolithic-sleeves — of the low and medium voltage cable joints, for the formation of high voltage cable joints, modifications were rendered necessary for taking into consideration the greater electrical stresses that existed.

These modifications have substantially brought about a greater precision in the workmanship and an increase in the sleeve-thickness — with respect to those sleeves that are destined for forming the low and medium voltage cable joints.

Whereas the problems have substantially been solved in the instances of monolithic-sleeve joints for low and medium voltages, to-date no success has been had, in practice, when realizing monolithic-sleeves joints for high voltages, in spite of the fact that these appear to be utilizable in theory.

The reason is as follows. Owing to the high electric stresses existing in high voltage joints, it is necessary for the monolithic-sleeve to exercise considerably higher pressures upon the cable-extremities, than those required for medium and/or low voltage joints, so as to guarantee the absence of any trace of air — and in this way, to avoid any risks of perforations occurring.

For obtaining the high pressures required, it is necessary to subject the monolithic-sleeve to being elastically deformed in the radial direction, equal to about 30% of its thickness. With the known processes for realizing joints, it is impossible to achieve what has just been stated above.

In fact, the known processes for realizing monolithic-sleeve joints, foresee: fitting the monolithic-sleeve onto one of the two extremities of the cables to be jointed; carrying-out the mechanical and electrical coupling between the cable-conductors; causing the sleeve to slide on the insulations of the joined cables till it becomes centered in the junction-zone.

As the pressure increases (that the monolithic-sleeve exercises on the cables), so also does the difficulty had in causing said sleeve to slide on the cables' insulations — because the force to be applied for causing said sliding, also increases.

In the instance of joints for high voltage cables, the pressure values that the sleeve applies to the cable insulations, are such as to cause grooves and tears to appear on the contacting surfaces during the sliding, and in correspondence of which, small quantities of air in the joint, result as being inevitably present.

Seeing that in high voltage cables the electric stresses are high, as already stated, these small quantities of trapped air between the monolithic sleeve and cable insulation, is the cause of the perforations occurring in the joints.

In practice, this drawback is rarely encountered in the instance of the monolithic sleeve joints for low and/or medium voltage cables.

Known devices for realizing cable joints of the type in question are described in German patent application 3001158 and in Japanese patent application 5449588.

Both known devices provides a rigid tubular body formed by two parts that mate together along generatrixes of said tubular body and means (a layer of grease in the German application and bearings in the Japanese application) over the outer surface of the rigid tubular body. With the known devices the above mentioned formation of grooves and tears can be formed on the sleeve surface while sliding upon the rigid tubular body due to the unavoidable discontinuity existing in correspondence of the generatrixs of this latter where its component parts mates together.

The aim of the present invention is to realize, in practice, reliable joints — especially in the case of high voltage cables provided with a monolithic sleeve, with facilitating, at the same time, the realization of the joints themselves.

What forms the object of the present invention is a device as defined in claim 1.

The present invention shall be better understood from the following detailed description made solely by way of non limiting example, with reference to the figures of the following drawing table, whereby:

Figure 1 — shows a cross-section of the device according to the invention for fitting a monolithic sleeve onto the junction zone of two cables;

Figure 2 — shows the device in function, during the realization of the joint.

The process for effectuating a joint comprises as fundamental phases, those of elastically expanding a monolithic sleeve for cable joints; positioning it in an elastically expanded condition in the junction zone of the conductors of two cables, and causing a uniform radical contraction, starting from one sleeve extremity and then proceeding progressively along the sleeve itself, up to the other extremity.

In this way, the monolithic sleeve comes into contact with the cables' insulations without any sliding, and the progression of the contact, associated with the sleeve's radial-contraction uniformity, causes a total and reliable expulsion of the air existing in the contact-zone between the sleeve and cable insulation.

In particular, the fundamental phases given above, of the process according to the present invention, are accompanied by other phases which are necessary for carrying-out the jointing between the cables. One particular form of realization of the process according to the present invention, is the following.

First and foremost, the extremities, of the two cables to be joined together in one joint, are prepared.

To this purpose, the cables' conductor, the insulation and the cables' semi-conductive outer layer are bared — on each of the extremities of the two cables and for a prefixed length.

This operation can be done to advantage parallelly to the executing of the following phases — whereby an elastic expansion is produced in the monolithic-sleeve of the joint for increasing the diametrical dimensions of its inner cavity — and more particularly, for increasing, in a uniform manner, the diametrical dimensions of said inner cavity.

At this point the monolithic-sleeve of the joint, in an elastically expanded state, is fitted onto the extremity of one of the two cables to be joined together.

Once the above phase is terminated, the mechanical and electrical connection is carried-out between the bared conductors at the extremities of the two cables, in an already known way — with moreover, making provision for disposing a metallic adaptor of the already known type, above the junction-zone of the conductors.

At this point, there follows the phase of centering the monolithic-sleeve — with respect to the junction-zone for the conductors of the two cables, with shifting it without allowing it to drag along the extremity of the cable on which it was previously positioned.

Once the centering of the monolithic-sleeve in the junction-zone of the two cables, has been effected, there follows the phase of inducing a progressive and uniform contraction in the radial direction along the sleeve itself, starting from one sleeve extremity — so as to bring the surface of the inner cavity of the latter into contact with the outer surface of the two cables' extremities.

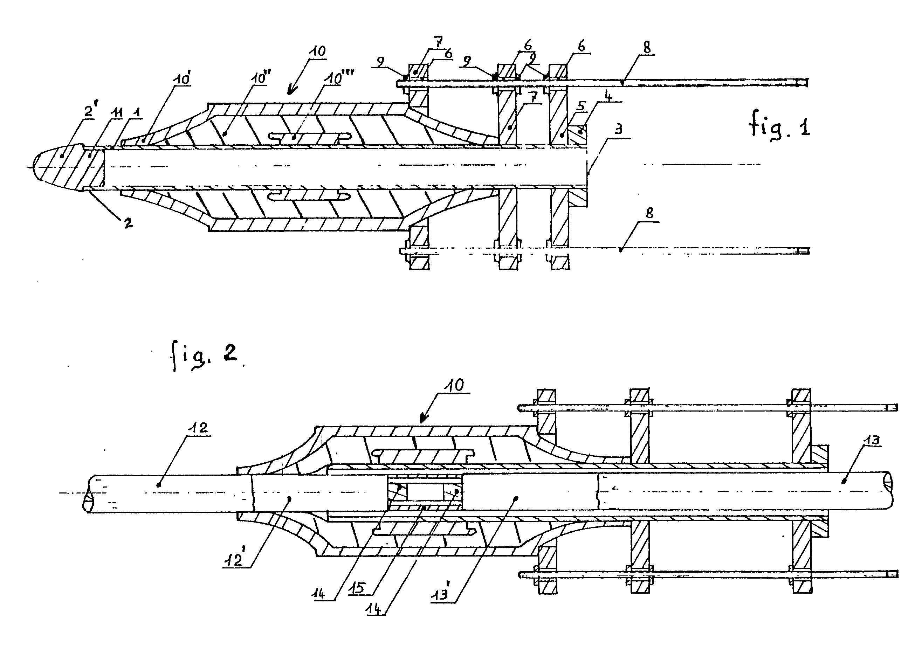

For carrying-out the process given above, there is utilized a device — which forms an object of the present invention and which is shown in FIG. 1.

As can be seen in FIG. 1, the device comprises a rigid tubular-body 1 — for example, in plastic material, having a cavity whose diametrical dimensions are greater than the outer dimensions of the cables to which it must be applied for realizing of the joint.

An ogive 2' is removably connected to one extremity 2 of the tubular-body 1, while at the opposite extremity 3 of said tubular-body 1, there is foreseen a cantilevered relief 4, made solidal with the tubular-body.

Connected to the relief 4, there is present a rigid material plate 5 provided with through-holes 6. A further pair of rigid plates 7 — these also provided with through-holes 6, is disposed around the rigid tubular-body 1, for engaging with the outer surface of the monolithic-sleeve 10 for joints, that presents an outer semi-conductive layer 10', an intermediate insulating-layer 10'', and a field-deflector 10''' made of a semi-conductive material.

Threaded-bars 8, pass into the through-holes 6 of the plates 5 and 7, in correspondence of which the plates themselves have threaded-bushes 9, engaged with the threading in the bars 8.

As previously stated, an ogive 2' is removably connectable to the rigid tubular-body 1.

The removable connection, between ogive 2' and the rigid tubular-body 1, is carried-out by inserting a cylindrical relief 11 — borne by the ogive 2', into the cavity of the tubular body 1.

The functioning of the above described device — with which a particular form of realization of the process according to the present invention is put into effect for realizing a joint, is as follows.

With the ogive 2' applied to the rigid tubular-body 1 and with the plates 5 and 7 — connected together by the threaded-bar 8, already fitted on said rigid tubular-body 1 in such a way that the plate 5 is in contact with the relief 4, a monolithic-sleeve 10 for cable joints is forced over the tubular-body 1.

To this purpose, the ogive 2' is disposed in correspondence of one extremity of the through-cavity of the monolithic-sleeve 10, and the latter is forced into passing over the ogive.

In this way, provision is made for elastically expanding the monolithic-sleeve 10, and with disposing it in the position shown in FIG. 1.

The functioning of the device of FIG. 1, for superimposing the monolithic-sleeve 10 in the junction-zone of two cables — with thus realizing a joint, is carried-out in the manner described herebelow, with the aid of the FIG. 2.

— Firstly the ogive 2' is removed from the rigid tubular-body 1.

— After the ogive 2 has been removed from the rigid tubular-body 1, the cavity of the latter results as being a through-cavity, and the device (shown in FIG. 1) is fitted over an extremity of one of the two cables 12 and 13 to be coupled together in the joint.

— At this point there is effectuated, in an already known way, the mechanical and electrical connection between the cable conductors 14, in correspondence of their extremities which have already been prepared previously — by baring, for prefixed tracts, both, the conductors, as well as the cable insulations 12' and 13'.

— After effecting the mechanical and electrical connection between the cables' conductors, and after having superimposed an already known metallic adaptor over said connection, the rigid tubular-body 1 is made to slide in such a way as to centre the monolithic-sleeve with respect to the junction-zone of the two cables.

— Once the above-said centering has been effectuated, the threaded-bushes 9 are acted upon, in such a way as to cause a relative drawing-apart, between the pair of plates 7 and the plate 5.

With the actioning of the threaded-bushes 9, a sliding takes place — between the outer surface of the rigid tubular-body 1 and the cavity of the monolithic-sleeve 10.

As a result of the relative sliding mentioned above, what takes place is that the extremity of the monolithic-sleeve, which is furthest away from the extremity 3 of the rigid tubular-body 1, no longer results as being supported by the latter and, due to the effect of the elastic recovery of the material forming the monolithic-sleeve, a uniform radial contraction of the sleeve takes place — with a movement only in the radial direction, that brings the said extremity 3 into contact with the cable surface and therefore, without having any sliding of the inner cavity of the sleeve against the cable surface.

In this manner, one extremity of the monolithic-sleeve is locked on the cable — and the situation, at this point, is the one shown in FIG. 2.

On proceeding with the actioning of the threaded-bushes 9, the relative sliding movement continues between the rigid tubular-body and the monolithic-sleeve.

The relative movement, between the monolithic-sleeve and the rigid tubular-body, is rendered possible, whereas simultaneously, any whatsoever movement in the longitudinal direction — between monolithic-sleeve and cable, is prevented (obviously starting from when one sleeve extremity is brought into contact with a cable) owing to the fact that the friction coefficient of the outer surface of the rigid tubular-body, with respect to the sleeve material, is preferably not over 0.2. This is a very small value if compared to the friction coefficients — comprised between 0.3 and 1, that exist between a monolithic-sleeve and a cable insulation.

The above-described operation is followed till such time as the complete slipping-off of the rigid tubular-body 1 from the monolithic-sleeve has taken place — i.e. till the entire inner cavity of the monolithic-sleeve has been perfectly mated with the surface of the two cables' extremities that are joined together.

At said point, a longitudinal slit is produced in the rigid tubular-body 1 — for the purpose of its removal from the cable.

From the description given above, of the process and device it can easily be understood how the proposed aims will be achieved.

In fact, by following the process that is effected (according to a particular form of realization) by means of the device that forms part of the invention, what is obviated in an absolute manner is the formation of scorings on the inside cavity surface of the monolithic-sleeve, or on the surfaces of the prepared extremities of the coupled cables. Hence, what is prevented is any risk of air being trapped in this zone, even to a minimum extent — which could result in the danger of perforations occurring.

Moreover, even the way in which the coupling is carried out between monolithic-sleeve and cables, guarantees to the greatest extent, that no possibility exists of any air being trapped in the contact-zone between monolithic-sleeve and cables' surface.

In fact, the progressiveness (starting from one sleeve extremity) of the radial uniform contraction of the sleeve, originates a progressive expulsion of air — from one extremity to the other of the monolithic-sleeve.

Moreover, through having a cables-sleeve coupling — by means of a radial contraction of the sleeve, which eliminates any least possibility of sliding taking place between the monolithic-sleeve and outer surface of the cables, not only is any scoring prevented, but also any danger of alterations occurring in the structure of the elements forming the monolithic-sleeve — especially in the zone where the semi-conductive parts of the sleeve itself, are welded to the insulation of the same.

To end with, the realizing of the joint through the process and device results are being considerably facilitated, because the forces to be applied for fitting-on the monolithic-sleeve to the cables, result as being reduced with respect to 'known' processes, thanks to the low friction coefficient that exists between the inner surface of the sleeve and the rigid tubular-body — which are part of the device for forming the joint and for realizing the process.

**Claims**

1. Device for realizing cable joints, of the type comprising a preformed elastically expandable sleeve (10) fitted onto the joined-together extremities of the cables (12, 13), comprising a rigid tubular body (1) provided with a collar (4) at one end (3) thereof and the sleeve (10) leans directly on said rigid tubular body (1) an ogival head (2') removably connected to the other end (2) of the rigid tubular body (1) and means for slipping the rigid tubular body from the sleeve (10), said device being characterized in that said rigid tubular body (1) is a rigid monolithic tube piece the bore of said tube having a diameter greater than that of the diameters of the cables (12, 13), and in that the said means for slipping the rigid tubular body (1) off the sleeve (10) comprises at least one removably rigid annular body (7) resting against one end of the sleeve (10) and means (8, 9) interposed between the removably rigid annular body (7) and the collar (4) that exerts a force system to cause a drawing movement of said collar (4) away from said removably rigid annular body (7).

2. Device according to claim 1 characterized in that the friction coefficient of the outer surface of the rigid monolithic tube piece (1) in respect of the material of the preformed elastically expandable sleeve (10) is not over 0,2.

3. Device according to claim 1 characterized in that the means that exercises a force system to cause a relative drawing apart between the collar (4, 5) and the removable rigid annular body (7) comprise threaded-rods (8) passing into through-holes (6) made both in said collar (4, 5) as well as in said removable rigid annular body (7), and aligned one with the other and having threaded-bushes (9) in correspondence of said holes (6), with means being foreseen for effecting a relative rotation between said threaded-rods (8) and said threaded-bushes (9).

## Patentansprüche

1. Vorrichtung zum Herstellen von Kabelverbindungen derjenigen Art, die eine vorgeformte elastisch ausdehnbare Hülse (10) aufweist, die auf den miteinander verbundenen Enden der Kabel (12, 13) angebracht ist, umfassend einen starren rohrartigen Körper (1), der an einem Ende (3) von ihm mit einem Bund oder Kragen (4) versehen ist, wobei die Hülse (10) sich direkt gegen den starren rohrartigen Körper (1) legt, einen bogenförmigen Kopf (2'), der mit dem anderen Ende (2) des starren rohrartigen Körpers (1) abnehmbar verbunden ist, und eine Einrichtung zum Herunterschieben des starren rohrartigen Körpers von der Hülse (10), dadurch gekennzeichnet, daß der starre rohrartige Körper (1) ein starres monolithisches Rohrstück ist, dessen Bohrung einen Durchmesser hat, der größer als der Durchmesser der Kabel (12, 13) ist, und daß die Einrichtung zum Herunterschieben des starren rohrartigen Körpers (1) von der Hülse (10) wenigstens einen abnehmbaren starren ringförmigen Körper (7), der sich gegen ein Ende der Hülse (10) legt, und eine Einrichtung (8, 9) aufweist, die zwischen dem abnehmbaren starren ringförmigen Körper (7) und dem Bund oder Kragen (4) angeordnet ist und ein System von Kräften ausübt, um eine Abziehbewegung des Kragen oder Bundes (4) von dem abnehmbaren starren ringförmigen Körper (7) weg hervorzurufen.

2. Vorrichtung nach Anspruch 1, dadurch gekennzeichnet, daß der Reibungskoeffizient der Außenfläche des starren monolithischen Rohrstücks (1) gegenüber dem Material der vorgeformten elastisch ausdehnbaren Hülse (10) nicht höher als 0,2 ist.

3. Vorrichtung nach Anspruch 1, dadurch gekennzeichnet, daß die Einrichtung, die ein System von Kräften ausübt, um relatives Auseinanderziehen zwischen dem Kragen oder Bund (4, 5) und dem abhehmbaren starren ringförmigen Körper (7) hervorzurufen, Gewindestangen (8) aufweist, die durch durchgehende Löcher (6) hindurchgehen, die in dem Kragen oder Bund (4, 5) und in dem abnehmbaren starren ringförmigen Körper (7) gebildet und miteinander ausgerichtet sind, wobei die Löcher (6) Gewindebuchsen (9) aufweisen und wobei Mittel vorgesehen sind, um relative Dregung zwischen den Gewindestangen (8) und den Gewindebuchsen (9) hervorzurufen.

## Revendications

1. Dispositif pour réaliser des joints de câble, du type comprenant un manchon (10) préformé expansible élastiquement, monté sur les extrémités des câbles (12, 13) réunies entre elles, un corps tubulaire rigide (1) pourvu d'un col (4) à une extrémité (3), le manchon (10) s'appuyant directement sur ledit corps tubulaire rigide (1), une tête ogivale (2') reliée de façon démontable à l'autre extrémité (2) du corps tubulaire rigide (1), et des moyens pour retirer le corps tubulaire rigide du manchon (10) en le faisant glisser, dispositif caractérisé en ce que ledit corps tubulaire rigide (1) est un tube monolithe rigide dont l'orifice a un diamètre supérieur à celui des câbles (12, 13), et en ce que lesdits moyens pour retirer le corps tubulaire rigide (1) du manchon (10) comprennent au moins un corps annulaire rigide démontable (7) s'appuyant contre une extrémité du manchon (10), et des moyens (8, 9) interposés entre le corps annulaire rigide démontable (7) et ledit col (4), qui exercent un ensemble de forces de façon à provoquer un mouvement d'éloignement du col (4) par rapport au corps annulaire rigide démontable (7).

2. Dispositif selon la revendication 1, caractérisé en ce que le coefficient de friction de la surface extérieure du tube monolithe rigide (1) par rapport au matériau du manchon (10) préformé expansible élastiquement, n'est pas supérieur à 0,2.

3. Dispositif selon la revendication 1, caractérisé en ce que les moyens exerçant un ensemble de forces de façon à provoquer un mouvement d'éloignement relatif entre le col (4, 5) et le corps annulaire rigide démontable (7) comprennent des tiges filetées (8) passant dans des trous traversant (6) pratiqués à la fois dans le col (4, 5) et dans le corps annulaire rigide démontable (7) et alignés les uns avec les autres, qui sont pourvus de bagues filetées (9) correspondant aux trous (6), des moyens étant prévus pour effectuer une rotation relative entre les tiges filetées (8) et les bagues filetées (9).

fig. 1

fig. 2